(19) Europäisches Patentamt / European Patent Office / Office européen des brevets

(11) **EP 3 151 177 A1**

(12) **DEMANDE DE BREVET EUROPEEN**

(43) Date de publication:
**05.04.2017  Bulletin 2017/14**

(51) Int Cl.:
***G06Q 10/06*** (2012.01)

(21) Numéro de dépôt: **16190835.5**

(22) Date de dépôt: **27.09.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **30.09.2015  FR 1559226**

(71) Demandeur: **Antalios**
**13009 Marseille (FR)**

(72) Inventeurs:
• **ADAM, Patrick**
  **13600 La Ciotat (FR)**
• **PISTORESI, Christophe**
  **13170 Les Pennes Mirabeau (FR)**

(74) Mandataire: **Boura, Olivier et al**
**Cabinet Beau de Loménie**
**232 avenue du Prado**
**13008 Marseille (FR)**

(54) **SYSTEME DE CONTROLE DE L'ETAT SANITAIRE D'UN LIEU ET PROCEDE DE DETERMINATION DU PROCHAIN NETTOYAGE**

(57)    L'invention concerne un système de contrôle (2) de la propreté d'un lieu (1), notamment des sanitaires, le système comprenant un moyen de comptage (4) du nombre d'entrées dans le lieu, le moyen de comptage étant apte à fournir une donnée de comptage, au moins un panneau (5) monté dans le lieu et comprenant un moyen de signalisation d'un besoin de nettoyage du lieu, le moyen de signalisation étant apte à fournir une donnée de satisfaction, et un moyen d'indication pour un agent de nettoyage d'indiquer le nettoyage du lieu, le moyen d'indication étant apte à fournir une donnée du dernier nettoyage comprenant au moins la date et l'heure du dernier nettoyage, dans lequel les données de comptage, du besoin de nettoyage, et du dernier nettoyage sont utilisées par un algorithme pour programmer le prochain nettoyage par un agent de nettoyage (AN).

FIG.1

EP 3 151 177 A1

**Description**

Arrière-plan de l'invention

La présente invention concerne un système qui permet le contrôle de l'état sanitaire d'un lieu, par exemple un local sanitaire, et un procédé de détermination de l'heure du prochain nettoyage.

L'état sanitaire d'un lieu, par exemple un local sanitaire ou « sanitaires » d'un site (un restaurant, un centre commercial, un aéroport, etc.), peut varier en fonction du nombre d'utilisateurs, du nombre d'agents de nettoyage disponibles, de la fréquence de nettoyage, etc.

Le niveau de propreté du lieu est souvent perçu par les utilisateurs comme un indicateur du niveau de service et de qualité, et peut laisser une bonne ou mauvaise impression non seulement des sanitaires, mais du site en général. Cependant, il est difficile parfois pour les propriétaires du site de maintenir les sanitaires propres car un nombre élevé d'utilisateurs ou des utilisateurs non-respectueux peuvent les dégrader rapidement, bien que les sanitaires viennent d'être nettoyés.

Un programme fixe de nettoyage, par exemple une fois par heure, risque de ne pas être suffisant s'il y a un grand nombre d'utilisateurs dans un court laps de temps (après l'arrivée d'un avion ou d'un car par exemple), ou peut ne pas être nécessaire s'il y a eu peu d'utilisateurs et/ou si ces derniers n'ont pas sali les lieux. Un programme variable de nettoyage, dans lequel le propriétaire demande aux agents de nettoyage de vérifier périodiquement les sanitaires et de les nettoyer seulement si nécessaire, est aussi une perte de temps et de ressources.

Le brevet américain US 6,819,238 divulgue un système de signalisation d'un besoin de nettoyage. Le système comprend un panneau installé sur le mur du sanitaire, avec un bouton poussoir et un texte qui indique qu'en appuyant sur le bouton, l'utilisateur peut signaler que le sanitaire a besoin d'être nettoyé. Le panneau est connecté à un dispositif de signalisation installé à l'extérieur, le dispositif comprenant une lumière qui s'allume une fois le bouton poussé.

En revanche, un tel système présent des inconvénients, par exemple des utilisateurs de mauvaise foi peuvent appuyer sur le bouton bien que les sanitaires n'aient pas besoin d'être nettoyés, obligeant l'agent de nettoyage à se déplacer pour rien.

Objet et résumé de l'invention

La présente invention a donc pour but principal de pallier de tels inconvénients en proposant un système de contrôle de la propreté d'un lieu, notamment des sanitaires, le système comprenant :

-    un moyen de comptage du nombre d'entrées dans le lieu, le moyen de comptage étant apte à fournir une donnée de comptage,

-    au moins un panneau monté dans le lieu et comprenant :

    -    un moyen de signalisation d'un besoin de nettoyage du lieu, le moyen de signalisation étant apte à fournir une donnée de satisfaction, et

    -    un moyen d'indication, pour un agent de nettoyage d'indiquer le nettoyage du lieu, le moyen d'indication étant apte à fournir une donnée du dernier nettoyage comprenant au moins la date et l'heure du dernier nettoyage,

dans lequel les données de comptage, de besoin de nettoyage, et du dernier nettoyage sont utilisées par un algorithme pour programmer le prochain nettoyage par un agent de nettoyage.

De préférence, les données de comptage et de satisfaction sont associées à des horodatages qui sont utilisés par l'algorithme.

De préférence également, le moyen de comptage compte aussi le nombre de sorties du lieu, les données d'entrée et de sortie étant horodatées et utilisées pour évaluer le durée moyen de chaque visite.

Le panneau peut comprendre en outre un affichage de la donnée du dernier nettoyage qui est mis à jour automatiquement lors de l'indication de nettoyage par l'agent de nettoyage via le moyen d'indication.

De même, le panneau peut comprendre en outre un affichage du prochain nettoyage calculé par l'algorithme, l'affichage du prochain nettoyage étant ajusté en temps réel en fonction des données de comptage, de besoin de nettoyage, et du dernier nettoyage.

De préférence, le système est relié à une unité de traitement et configuré pour envoyer les données de comptage, de besoin de nettoyage, et du dernier nettoyage à l'unité de traitement, l'unité de traitement permettant d'établir des listes d'informations concernant un ou plusieurs panneaux, leurs emplacements, les derniers nettoyages, les agents de nettoyage qui l'ont effectué, les heures et les agents de nettoyage prévus pour les prochains nettoyages, les fréquences de nettoyage dans la journée, les niveaux de satisfaction moyen, les comptages d'utilisateurs total par jour, les fréquentations par tranche horaire et/ou les états des panneaux.

Le système peut comprendre en outre un affichage configuré pour indiquer aux utilisateurs des informations concernant un nettoyage en cours ou prochainement et/ou un autre lieu à utiliser.

Le moyen de comptage peut comprendre deux lasers montés dans le cadre d'une porte, chaque laser ayant un faisceau qui traverse la longueur de la porte et un capteur en face du laser et qui reçoit le faisceau, l'ordre d'interruption des faisceaux indiquant l'entrée ou la sortie d'un utilisateur.

Le moyen de signalisation du besoin de nettoyage peut permettre aux utilisateurs d'indiquer un niveau de satisfaction de la propreté du lieu, qui sera utilisé pour planifier le prochain nettoyage. Dans ce cas, le panneau stocke avantageusement une indication d'un niveau de satisfaction par un agent de nettoyage, cette indication étant utilisée par l'algorithme pour évaluer les indications par les utilisateurs.

L'invention a également pour objet un procédé de détermination du prochain nettoyage d'un lieu équipé du système tel que défini précédemment, le procédé comprenant les étapes de :

- compter, par le moyen de comptage, le nombre de personnes qui entrent dans le lieu,
- fournir une donnée de comptage,
- détecter la signalisation, par un utilisateur, d'un besoin de nettoyage du lieu via le moyen de signalisation
- fournir une donnée de satisfaction,
- indiquer, par un agent de nettoyage, le nettoyage du lieu,
- fournir une donnée du dernier nettoyage comprenant au moins la date et l'heure du dernier nettoyage, et
- utiliser, par un algorithme, les données de comptage, de besoin de nettoyage, et du dernier nettoyage pour programmer le prochain nettoyage par un agent de nettoyage.

De préférence, le temps restant avant le prochain nettoyage est calculé par un algorithme utilisant un coefficient de satisfaction déterminé selon des niveaux de satisfaction indiqués par les utilisateurs, un coefficient de la fréquentation et la fréquentation indiquée par le moyen de comptage.

La durée estimée d'utilisation du lieu peut être calculée par un algorithme qui utilise des données d'entrée et de sortie fournies par le moyen de comptage.

Un capital de propreté peut être calculé par un algorithme pour lier l'état de propreté du lieu au temps, afin de calculer dans combien de temps l'état des sanitaires nécessitera un nettoyage.

L'invention a encore pour objet un programme d'ordinateur stocké sur un support non-transitoire, le programme comprenant un algorithme configuré pour mettre un oeuvre le procédé tel que défini précédemment.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente une vue de face d'un lieu équipé d'un système de contrôle de nettoyage selon un mode de réalisation ;
- les figures 2A, 2B représentent une vue en perspective d'un système de comptage d'utilisateurs et une vue de face d'un panneau de satisfaction utilisés dans le cadre du système de contrôle de nettoyage, et
- la figure 3 représente un graphe entre le temps restant avant le prochain nettoyage et le temps passé depuis le dernier nettoyage.

Description détaillée de l'invention

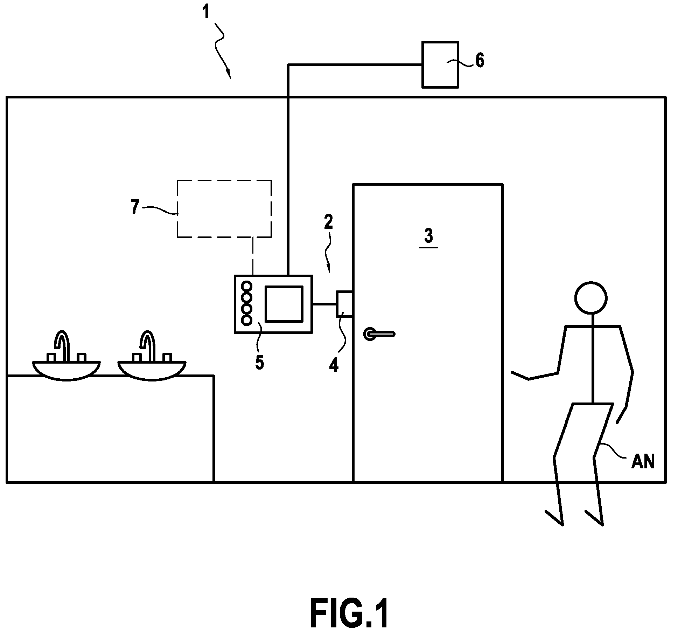

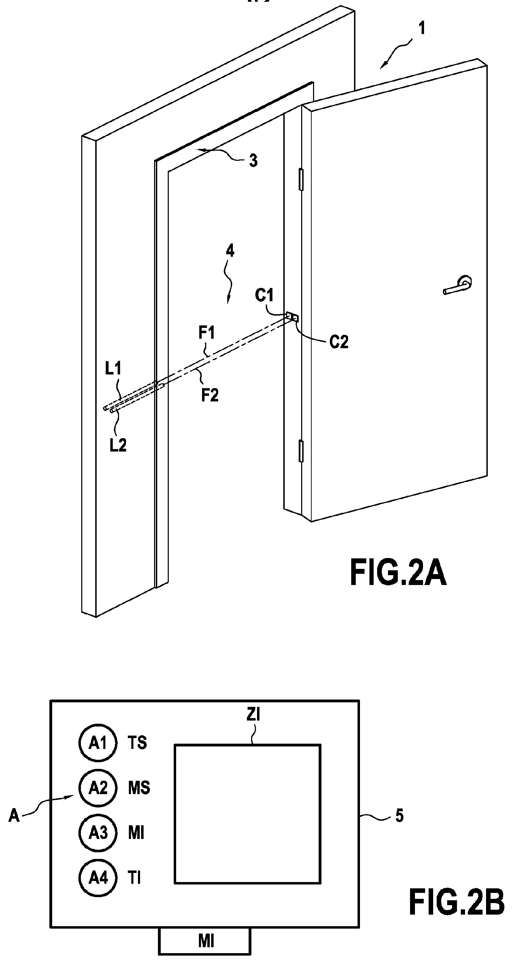

La figure 1 représente un vue de face d'un lieu 1 équipé d'un système de contrôle sanitaire 2. Le lieu 1, ici les sanitaires, comprend des toilettes, des vasques ou lavabos, des stations pour sécher les mains, etc. Le système de contrôle 2 comprend une entrée/sortie 3 (ici, une porte) équipée d'un moyen de comptage 4 du nombre d'entrées et de sorties d'utilisateurs (décrit plus en détail en relation avec la figure 2A), un panneau de satisfaction 5 (monté par exemple sur le mur à côté de la porte), une unité centrale 6 de traitement de données et un affichage 7 (monté par exemple à l'extérieur des sanitaires). Un agent de nettoyage AN est chargé de nettoyer les sanitaires 1 régulièrement, en fonction du temps passé depuis le dernier nettoyage, du niveau de satisfaction de la propreté indiqué par les utilisateurs, et du nombre d'utilisateurs depuis le dernier nettoyage.

La figure 2A représente une vue en perspective du moyen de comptage d'utilisateurs 4 ou « compteur ». Le compteur 4 est ici un ensemble de deux lasers L1, L2 montés parallèles côte à côte, notamment horizontalement dans le cadre de la porte 3, chaque laser L1, L2 ayant un faisceau laser F1, F2 respectif qui s'étend transversalement dans l'ouverture du cadre de la porte et qui est capté par un capteur C1, C2 respectif, les capteurs C1, C2 étant montés en face des lasers L1, L2 sur les bords du cadre de la porte 3. Toute personne qui entre ou qui sort interrompt les faisceaux, soit F1 en premier et ensuite F2 pour une personne qui entre, soit F2 en premier et ensuite F1 pour une personne qui sort. Les capteurs C1, C2 envoient des données d'interruption au panneau 5, qui enregistre l'ordre d'interruption (F1, F2 ou F2, F1) associé à un horodatage de l'interruption en tant que donnée de comptage.

La figure 2B est une vue de face du panneau de satisfaction 5, qui comprend une zone d'instructions ZI, au moins un moyen de signalisation du niveau de satisfaction de la propreté du lieu, ici un actionneur A (par exemple, un bouton poussoir et de préférence plusieurs boutons A1, A2, A3, A4), et couplé à ou comprenant un moyen d'indication MI de passage d'un agent de nettoyage AN.

Le panneau 5 est de préférence relié aux moyens de comptage 4 et comprend en outre une horloge et une source d'alimentation (une pile ou un raccordement à un réseau d'alimentation électrique). En outre, le panneau 5 est solide et résiste aux chocs et à l'arrachement, ou à d'autres formes de vandalisme. Le panneau 5 peut comprendre en outre une mémoire pour stocker des données, une unité de traitement des données, et un moyen de communication des données, par exemple par clé USB, par liaison filaire ou non-filaire, à l'unité de traitement 6 et/ou à l'affichage 7.

Dans ce mode de réalisation, la zone d'instructions ZI est un écran du type écran à cristaux liquides (« liquid crystal display » ou LCD en anglais) qui demande aux utilisateurs d'indiquer leur niveau de satisfaction de la propreté du lieu en appuyant sur les actionneurs A1 à A4 qui sont marqués Très Satisfait (TS), Moyennement Satisfait (MS), Moyennement Insatisfait (MI), Très Insatisfait (TI), etc. Un appui sur un de ces actionneurs est détecté par le panneau 5, qui l'enregistre associé à un horodatage de l'appui en tant que donnée de satisfaction.

Le moyen d'indication MI de passage permet à l'agent de nettoyage de signaler son passage et comprend par exemple selon la technologie 1-wire ou « clé Dallas », un moyen d'envoyer des données avec des vitesses de transmission et un coût inférieurs. La signalisation de passage est détectée par le panneau 5, qui stocke la signalisation associée à un horodatage du passage en tant que donnée du dernier nettoyage.

A son arrivée et/ou à son départ, l'agent de nettoyage signale son passage qui est stocké avec un horodatage du passage. L'identité de l'agent peut éventuellement être aussi associée au passage. Ces données sont enregistrées et stockées dans la mémoire du panneau et/ou envoyées à l'unité de traitement 6. En outre, l'agent de nettoyage AN peut évaluer l'état sanitaire des sanitaires 1 et appuyer sur l'actionneur correspondant. Cette évaluation est utilisée pour mieux relativiser les données de satisfaction des utilisateurs, qui ne sont pas des professionnels du nettoyage et en général ont des perceptions plus négatives que la réalité. Après le passage de l'agent de nettoyage AN, on présume que le niveau de propreté/satisfaction est rétabli au plus haut (Très Satisfait).

Dans un mode de réalisation, le panneau 5 indique en outre l'heure du dernier nettoyage, de préférence mise à jour automatiquement lors de l'indication du passage de l'agent de nettoyage, et l'heure du prochain nettoyage programmé, qui est modifiée en fonction des données de comptage et de satisfaction.

Dans un mode de réalisation, si l'utilisateur donne un avis négatif (Moyennement Insatisfait ou Très Insatisfait), le temps avant le prochain nettoyage diminue en conséquence, par exemple par cinq ou dix minutes respectivement.

L'utilisation des données de comptage, de satisfaction, et du dernier nettoyage pour déterminer l'heure du prochain nettoyage seront expliquées plus en détail plus loin.

Le panneau 5 peut permettre d'autres indications et possibilités, par exemple indiquer le nombre d'utilisateurs depuis le dernier nettoyage, permettre à un utilisateur de signaler d'autres informations (une urgence médicale, un besoin de papier toilette, etc.), informer les utilisateurs de l'évaluation moyenne du lieu, mettre un utilisateur en communication avec un responsable, etc.

L'unité de traitement 6 peut être connectée à plusieurs sanitaires 1, chacun étant équipé d'un tel système de contrôle 2. L'unité de traitement 6 permet une gestion des flux d'utilisateurs. Par exemple, un premier sanitaire détecte qu'il y a eu un passage important d'utilisateurs et que son état sanitaire s'est dégradé tandis qu'un deuxième sanitaire a été peu fréquenté et reste relativement propre. L'affichage 7 à l'extérieur du premier sanitaire permet de rediriger des utilisateurs vers le deuxième sanitaire. De même, un nettoyage en cours ou à venir, un grand nombre d'utilisateurs présents en même temps, ou toute autre raison, peut être affiché et/ou provoquer la redirection d'utilisateurs.

A partir de l'unité de traitement 6, un responsable peut accéder à des informations, par exemple une liste des panneaux 5 installés sur le site et/ou une liste d'agents de nettoyage AN. Dans le cas d'une liste des panneaux 5, les informations concernant une désignation du panneau, son emplacement, le dernier nettoyage, l'agent qui l'a effectué, l'heure et l'agent prévus pour le prochain nettoyage, la fréquence de nettoyage dans la journée, le niveau de satisfaction moyen, le comptage d'utilisateurs total par jour, la fréquentation par tranche horaire, l'état du panneau en temps réel (l'état de la batterie, état de la connexion aux moyens de comptage 4 et/ou l'unité de traitement 6), etc.

La liste concernant les agents de nettoyage AN peut inclure le nombre de nettoyages effectués par jour, par heure, le temps passé pour chaque nettoyage (par pointage avant et après le nettoyage), l'évaluation de son travail, etc.

En outre, il est possible de consulter les statistiques de travail, afficher une courbe représentative de la fréquence de nettoyage, afficher une courbe représentative du niveau de satisfaction globale ou par site, etc.

Le tableau 1 ci-dessous donne un exemple d'utilisation du système de contrôle 2 de propreté du lieu 1. A 12:10, l'agent de nettoyage finit le nettoyage, signale son passage, et le niveau de satisfaction est remis au plus haut Très Satisfait (4). A 12:15, une personne entre et laisse une évaluation Moyennement Satisfait (3). A 12:16, deux personnes entrent mais ne laissent pas d'évaluation. A 12:18, deux personnes entrent et laissent une évaluation Très Satisfait (4). A 12:20, une personne entre et laisse une évaluation Moyennement Satisfait (3). A 12:21, une personne entre et laisse une évaluation Très Insatisfait (1). A 12:25, une personne entre et laisse une évaluation Moyennement Satisfait (3). A 12:30, une personne entre et laisse une évaluation Moyennement Insatisfait (2). A 12:34, deux personnes entrent et laissent une évaluation Moyennement Insatisfait (2). A 12:40, une personne entre et laisse une évaluation Très Insatisfait (1).

Tableau 1

|     | Passage           | Heure | Satisfaction |
| --- | ----------------- | ----- | ------------ |
| 1)  | Agent de nettoyage | 12:10 | 4            |
| 2)  | 1 personne        | 12:15 | 3            |
| 3)  | 2 personnes       | 12:16 | X            |
| 4)  | 2 personnes       | 12:18 | 4            |
| 5)  | 1 personne        | 12:20 | 3            |
| 6)  | 1 personne        | 12:21 | 1            |
| 7)  | 1 personne        | 12:25 | 3            |
| 8)  | 1 personne        | 12:30 | 2            |
| 9)  | 2 personnes       | 12:34 | 2            |
| 10) | 1 personne        | 12:40 | 1            |

On peut noter ce qui suit par rapport au tableau:

- Au cas 2), il n'y a pas eu de visite du lieu entre l'agent de nettoyage et la personne responsable de l'évaluation. On peut considérer que son évaluation de Moyennement Satisfait (3) n'est pas tout à fait conforme à la réalité, donc on peut donner moins d'importance (poids) à cette évaluation.
- Au cas 6), l'évaluation qui précède étant relativement haute (Moyennement Satisfait), et l'évaluation qui suit étant aussi relativement haute (Moyennement Satisfait), on peut considérer que son évaluation de Très Insatisfait n'est pas tout à fait appropriée (soit elle est plus exigeante que les autres, soit elle essaie de fausser volontairement les données) on peut donner moins d'importance (poids) à cette évaluation.
- Enfin, à partir du cas 8), on peut considérer que l'état sanitaire se dégrade, plusieurs évaluations successives étant de plus en plus négatives.

Les évaluations peuvent être aussi utilisées pour évaluer le travail de l'agent de nettoyage AN et/ou le niveau de propreté requis. Dans le premier cas, si tout de suite après l'intervention de l'agent le niveau de satisfaction est moyen, il faut contrôler le travail de l'agent. Dans le dernier cas, il faut augmenter les standards de nettoyage du lieu en général.

Il est possible de disposer d'une version « temporaire » du système, qui permet d'évaluer les comportements d'utilisateurs pendant une durée donnée, par exemple quelques mois, afin d'établir un programme de nettoyage convenable. Ensuite, le système sera enlevé ou remplacé par un système fixe. De même, un simple comptage d'utilisateurs, sans mettre en place le panneau 5 et le reste du système, peut être employé dans un premier temps, afin d'établir un premier programme de nettoyage, qui sera affiné au fil de temps.

Algorithmes

Capital de Propreté

Une valeur « capital de propreté » CP peut être utilisée pour lier l'état de propreté du sanitaire 1 au temps, notamment le temps restant TR avant le prochain nettoyage, afin de calculer dans combien de temps l'état des sanitaires nécessitera un nettoyage. Ainsi, le moment le plus adéquat pour le prochain nettoyage peut être déterminé.

Ce capital de propreté CP dépend alors du temps passé TP depuis le dernier nettoyage, du nombre d'utilisateurs entretemps, et du niveau de satisfaction.

Il a été constaté qu'en général, l'état de propreté ne dépend pas seulement du nombre d'utilisateurs dans un laps de temps, mais aussi de la répartition temporelle du nombre d'utilisateurs. Plus précisément, un grand nombre d'utilisateurs dans un court laps de temps salit plus rapidement les sanitaires par rapport au même nombre d'utilisateurs dans un lapse de temps plus important. Une forte affluence crée en général un stress pour se dépêcher, et les utilisateurs ont tendance à laisser des gouttes d'eau sur les lavabos, des traces de savon, des serviettes qui débordent de la corbeille, etc.

Le but ici est de permettre au système de contrôle 2 de pouvoir déterminer et d'auto-ajuster la valeur initiale du capital de propreté CP en fonction des événements, qui peut varier d'un sanitaire à un autre.

L'algorithme devrait permettre:

- de faire varier à moyen terme la valeur initiale (plusieurs cycles de nettoyage nécessaires à un ajustement) ;
- d'augmenter ou diminuer la valeur du capital de propreté CP ; et
- de prendre en compte l'avis de l'agent de nettoyage AN lors de son passage.

En conséquence, une valeur initiale CP0 est déterminée en fonction des habitudes de travail des équipes de nettoyage déjà en service, c'est-à-dire l'intervalle moyen entre deux passages dans un même sanitaire, ajusté avec un coefficient expérimental qui sera affiné au fil des utilisations, comme donné par l'équation suivante :

$$CP_0 = IM \times CO_{EX} \qquad [équation\ 1]$$

dans lequel $CP_0$ est le capital de propreté initial, IM est un intervalle moyen (par exemple, 60 minutes), et $CO_{EX}$ est un coefficient expérimental, qui permet de prendre en compte les variations entre deux cycles de nettoyage.

L'avis de l'agent de nettoyage AN lors de son arrivée sur site est pris en compte dans le calcul afin d'ajuster la valeur initiale du capital de propreté CP.

Si l'évaluation de l'agent est négative (valeur 1, 2), son intervention est justifiée, et le capital de propreté ne change pas :

$$CP_{N+1} = CP_N \qquad [équation\ 2]$$

Si l'évaluation de l'agent de nettoyage AN est positive (valeur 3, 4), son intervention aurait pu attendre car les sanitaires sont encore propres à son arrivée.

En conséquence, le capital de propreté CP peut être augmenté comme suit :

$$CP_{N+1} = CP_N + (CO_{AN} \times CP_N) \qquad [équation\ 3]$$

dans lequel $CO_{AN}$ est un coefficient d'évaluation par l'agent qui peut varier, par exemple une évaluation « très bonne » donne lieu à une augmentation du capital plus important qu'une évaluation « bonne ».

La valeur initiale $CP_0$ et les coefficients $CO_{EX}$, $CO_{AN}$ seront affinés au cours de l'utilisation des sanitaires pour qu'à terme le capital de propreté CP des sanitaires soit très prévisible.

Pourcentage de satisfaction

Le pourcentage de satisfaction PS est défini comme la somme des avis positif (Très Satisfait et Moyennement Satisfait) divisé par le nombre total d'avis, donné par l'équation suivante :

$$PS = (NE_{TS} + NE_{MS})/(NE_T) \times 100 \qquad [équation\ 4]$$

dans lequel $NE_{TS}$ est le nombre d'évaluations Très Satisfait, $NE_{MS}$ est le nombre d'évaluations Moyennement Satisfait, et $NE_T$ est le nombre total d'évaluations, c'est-à-dire :

$$NE_T = NE_{TS} + NE_{MS} + NE_{MI} + NE_{TI} \qquad [équation\ 5]$$

dans lequel $NE_{MI}$ est le nombre d'évaluations Moyennement Insatisfait et $NE_{TI}$ est le nombre d'évaluations Très Insatisfait.

Si le nombre total d'évaluations $NE_T$ est égal à 0, on peut suspecter une éventuelle panne d'équipement. Par exemple, si le compteur 4 indique qu'une dizaine d'utilisateurs ont utilisé les sanitaires mais qu'aucun n'a laissé une évaluation, il est possible que le système ait un disfonctionnement. Le pourcentage de satisfaction PS peut être mis à 0% ou à une autre valeur estimée, et un agent peut être envoyé sur place pour vérifier le bon fonctionnement du système.

Par contre, si le compteur 4 indique qu'aucune personne n'est entrée depuis le dernier nettoyage, il est considéré que le niveau de propreté est toujours maximal et le pourcentage de satisfaction PS est mis à 100%.

De même, si le système 2 constate que dans un intervalle de temps il n'y a pas eu de détection de passage, il peut déclencher une procédure de vérification, surtout s'il y a lieu pendant une heure de haute fréquentation (pendant la journée).

Calcul de la durée avant passage

L'équation suivante permet de calculer, à temps N, le temps restant TR à temps N+1 avant le prochain nettoyage :

$$TR_{N+1} = TR_N - (CO_{PS})^*(\Delta T) - (CO_{FR})^*(F_{N+1} - F_N)$$

*[équation 6]*

dans lequel $TR_{N+1}$ correspond au temps restant TR à temps N+1, $TR_N$ correspond au temps restant TR actuellement à temps N, $CO_{PS}$ correspond à un coefficient de satisfaction, $\Delta T$ correspond à l'intervalle entre deux calculs, $CO_{FR}$ correspond à un coefficient de la fréquentation, $F_{N+1}$ correspond à la fréquentation à temps N+1, et $F_N$ correspond à la fréquentation à temps N.

Le coefficient de satisfaction peut être égal à 1.5 si le pourcentage de satisfaction PS est inférieur ou égal à 40 % ($PS \leq 0.4$), égal à 1 si le pourcentage de satisfaction PS est entre 40 et 70 % ($0.4 < PS < 0.7$) et égal à 0.5 si le pourcentage de satisfaction PS est supérieur ou égal à 70 % ($0.7 \leq PS$). C'est-à-dire que le délai avant le prochain nettoyage est raccourci par rapport au délai standard si la satisfaction est en-dessous du niveau standard, reste inchangé si la satisfaction est conforme au niveau standard, et prolongé si la satisfaction est au-dessus du niveau standard.

Le coefficient de fréquentation $CO_{FR}$ est déterminé expérimentalement par un audit sur le lieu d'installation.

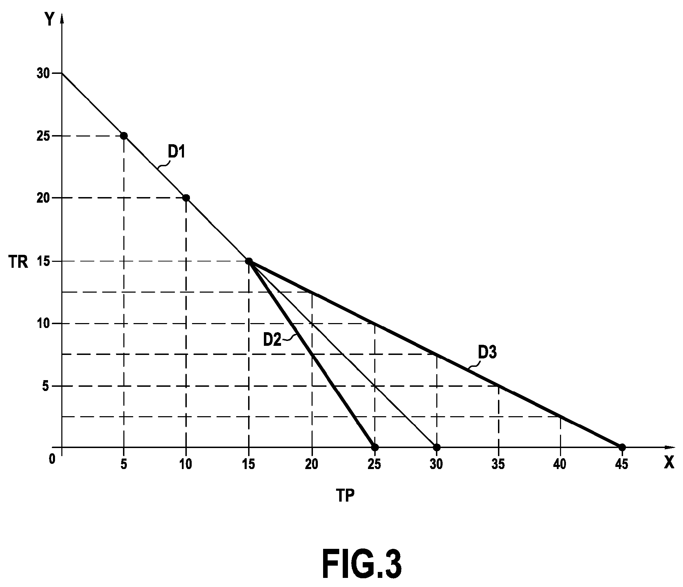

La figure 3 montre un graphe de calcul du prochain nettoyage PN, avec le temps restant TR sur l'axe y et le temps passé TP sur l'axe X, une courbe D1 de la durée programmée, et deux courbes D2, D3 de la durée modifiée selon les données de comptage et/ou satisfaction. Des données « négatives » (fréquentation importante et/ou évaluations négatives) diminuent la durée avant le prochain nettoyage, comme montré à la courbe D2 et des données « positives » (fréquentation légère et/ou évaluations positives) augmentent la durée avant le prochain nettoyage, comme montré à la courbe D3.

Ici, la valeur du temps restant est réactualisée toutes les cinq minutes ($\Delta T = 5$ minutes), mais elle peut être réactualisée plus ou moins fréquemment.

Pour les exemples pratiques qui suivent, le coefficient de la fréquentation $CO_{FR}$, et la fréquentation ($F_{N+1} - F_N$) ne sont pas pris en compte, pour des raisons de simplicité. En général, le coefficient de fréquentation $CO_{FR}$ ne va pas varier énormément d'un cycle à l'autre, tandis que la fréquentation varie. Le coefficient de fréquentation $CO_{FR}$ permet de donner plus ou moins d'importance au paramètre de fréquentation ($F_{N+1} - F_N$).

En fonction du lieu, de l'heure ou des utilisateurs, le coefficient peut être modifié pour que la fréquentation soit plus ou moins importante sur la diminution du capital de propreté. Pour un même lieu, selon le jour, l'heure, et d'autres facteurs, le passage d'un certain nombre d'utilisateurs dans les sanitaires n'aura pas le même impact. Pour pouvoir prédire la fréquentation entre le temps N et le temps N+1, il faudra avoir suffisamment de données historiques enregistrées pour pouvoir effectuer une analyse statistique des événements et ainsi prévoir au mieux la fréquentation future.

A temps passé 0 TP = 0, les sanitaires viennent d'être nettoyés, et il reste 30 minutes $TR_0 = 30$ avant le prochain passage programmé. Le prochain temps restant TR à 5 minutes (TP = 5) est égale à :

$$TR_5 = 30 - (1)^*(5) = 25 \text{ minutes}$$

Au temps passé TP = 5 minutes, le pourcentage de satisfaction est à 65% ce qui donne :

$$TR_{10} = 25 - (1)^*(5) = 20 \text{ minutes}$$

Au temps T = 10 minutes, le pourcentage de satisfaction est à 50% ce qui donne :

$$TR_{15} = 20 - (1)*(5) = 15 \text{ minutes}$$

A partir de 15 minutes, deux hypothèses sont montrées, D2, D3. Dans le cas de D2, il est considéré que l'état sanitaire se dégrade, avec un pourcentage de satisfaction de moins de 40%.

$$TR_{20} = 15 - (1.5)*(5) = 7.5 \text{ minutes,}$$

et ensuite

$$TR_{25} = 7.5 - (1.5)*(5) = 0 \text{ minutes.}$$

Le prochain nettoyage est alors programmé pour intervenir à 25 minutes, au lieu de 30 minutes.
Dans le cas de D3, il est considéré que l'état sanitaire s'améliore, par exemple un utilisateur qui a ramassé des serviettes en papier et les a jetées dans la poubelle, avec un pourcentage de satisfaction supérieur à 70%.
$TR_{20}$ = 15 - (0.5)*(5) = 12.5 minutes et ainsi de suite, avec un délai total final de 45 minutes entre les nettoyages.
On peut donc comparer le calcul du temps avant le prochain passage à une gestion prédictive de l'approvisionnement, quel que soit le domaine d'application, le principe est identique.

Calcul du délai d'intervention

Le délai d'intervention d'un agent de nettoyage AN peut être calculé afin de programmer l'intervention au meilleur moment possible, en prenant en compte le temps nécessaire à son arrivé sur site. De cette façon on peut le prévenir le plus tard possible, mais suffisamment tôt pour qu'il soit opérationnel lorsque le capital de propreté CP est épuisé, ni avant, ni après.
Pour ce faire, le délai initial est fixé pour correspondre à un certain pourcentage du capital initial.

$$D_0 = CO_{CP} * CP_0$$

dans lequel $D_0$ correspond au délai initial, $CO_{CP}$ correspond à un coefficient du capital de propreté CP, et $CP_0$ correspond au capital de propreté initial. En pratique, le coefficient $CO_{CP}$ est compris entre 0% et 15%. Par exemple, si le capital $CP_0$ est égal à cinq heures (300 minutes) et le coefficient $CO_{CP}$ est égal à 5%, le délai est égal à = 0.05*300 = 15 minutes.
L'agent de nettoyage AN est prévenu que dans quinze minutes l'état des sanitaires ne sera plus acceptable, et le temps réel d'intervention est calculé. Le délai $D_0$ est enregistré, et au fil de temps une moyenne est calculée avec la valeur initiale, qui permet d'obtenir un délai de plus en plus précis.
L'écart type de toutes les valeurs relevées est déterminé de façon à prendre en compte les aléas qui sont ou peuvent arriver lors des tournées de nettoyage.
Deux façons différentes d'estimer le délai peuvent être utilisées, chacune ayant des avantages et inconvénients en fonction du type de lieu à équiper, des équipes présentes sur place et du l'utilisation globale des sanitaires en question :

$$D_{N+1} = AVG(D) \pm \sigma \qquad \qquad \textit{[équation 7]}$$

dans lequel σ (sigma) correspond à l'écart type. Pour arriver plutôt en avance, sigma est ajouté à la moyenne, pour arriver plutôt en retard, sigma est retranché de la moyenne.
L'équation suivante indique la moyenne des délais d'intervention de l'agent de nettoyage AN depuis la mise en service du système (ou réinitialisation) :

$$AVG(D_N) = 1/N * \sum D_{K=0 \text{ à } N} \qquad \qquad \textit{[équation 8]}$$

L'équation suivante indique l'écart type de toutes les valeurs relevées :

$$\sigma_N = \sqrt{(\sum_{K=0 \text{ à } N} (D_K - AVG(D_N))^2} \qquad \textit{[équation 9]}$$

De cette façon la valeur est ajustée au cours de l'utilisation du panneau 5 de façon à être la plus optimale possible. Ainsi, un agent de nettoyage AN sera averti au moment le plus propice, et la productivité sera améliorée en éliminant au maximum les pertes de temps inutiles. En outre, les sanitaires ne resteront pas longtemps dans un état de saleté trop élevé, ce qui garantit un niveau de service élevé.

On peut noter que dans cette approche, le délai d'intervention est considéré comme suivant une loi de distribution normale. Néanmoins, une autre loi peut être utilisée pour améliorer l'estimation du délai.

En outre, le délai d'intervention peut prendre en compte d'autres données, par exemple, si l'agent de nettoyage AN est actuellement en intervention dans un autre sanitaire, le temps nécessaire qu'il lui faudra pour arriver au nouveau site, et, s'il est en pause, la durée de celle-ci, etc.

En outre, le programme de calcul peut prendre en compte aussi le niveau de satisfaction pour programmer l'intervention. Par exemple, si le niveau de satisfaction est très bas, on peut considérer qu'il faudra plus de temps pour le nettoyer.

Calcul de la fréquentation par intervalle

La fréquentation des sanitaires peut être calculée par intervalle de temps, c'est-à-dire par exemple pendant un jour (24 heures) et par tranches d'une heure.

Dans l'exemple qui suit, un tableau est créé comprenant toutes les valeurs de la journée (ou de la durée de mesure) réparties selon un indice qui indique l'intervalle en question, un compteur qui correspond à la fréquentation mesurée et un minuteur qui correspond à la durée de l'intervalle restant.

Dans une première étape d'initialisation, montrée ici, les indices sont mis à zéro, un tableau (Tableau 2 ci-dessous - Note : Les tableaux ci-dessous ne montrent que 6 intervalles de 4 heures chacun, pour des raisons de simplicité) est créé comprenant n éléments selon le nombre d'intervalles. Les fréquentations mesurées pour chaque intervalle sont aussi mises à zéro, et les durées d'intervalle sont mises à 4 h (240 minutes). (Il est noté que les durées des intervalles ne sont pas forcément égales, mais peuvent être plus ou moins longues selon les différentes périodes de la journée, par exemple un intervalle de 22h à 8h, et ensuite des intervalles de deux heures.)

Compteur = 0

Tableau 2

| Indice | Fréquentation Mesurée | Durée de l'intervalle restant |
|--------|----------------------|-------------------------------|
| 0 | 0 | 240 minutes |
| 0 | 0 | 240 minutes |
| 0 | 0 | 240 minutes |
| 0 | 0 | 240 minutes |
| 0 | 0 | 240 minutes |
| 0 | 0 | 240 minutes |

Dans une seconde étape de mesure, le tableau (Tableau 3 - ci-dessous) est mis à jour selon les données des moyens de comptage 4. Dès qu'une interruption relative au mouvement est détectée (soit les entrées, soit les sorties selon la configuration et l'installation du système), la valeur du compteur est augmentée = compteur +1. Une fois que le minuteur de l'intervalle restant expire, l'intervalle est terminé, et la valeur du compteur est enregistrée dans la colonne « Fréquentation Mesurée ».

Le tableau 3 montre un indice 1 terminé, avec 5 fréquentations, et 0 minute restante. L'indice est augmenté à 2, le compteur est en train de compter les interruptions à nouveau, 200 minutes restantes dans l'intervalle. En résumé, la valeur du compteur pour l'intervalle qui vient de se finir est enregistrée par rapport à l'intervalle correspondant de la table, la valeur du compteur est réinitialisée, l'indice est augmenté afin de passer au prochain intervalle, le minuteur est relancé et le compteur recommence.

Compteur = 6

Tableau 3

| Indice | Fréquentation Mesurée | Durée de l'intervalle restant |
|---|---|---|
| 1 (0:00 à 3:59) | 5 | 0 minutes |
| 2 (4:00 à 7:59) | 0 | 200 minutes |
| 0 | 0 | 240 minutes |
| 0 | 0 | 240 minutes |
| 0 | 0 | 240 minutes |
| 0 | 0 | 240 minutes |

Comme montré au tableau 4 ci-dessous, la période de mesure, ici 24 heures, est terminée. Le tableau est complètement renseigné. L'indice est augmenté de 6 à 7, ce qui est supérieur à la taille maximale (indice = 6) du tableau, donc le tableau est enregistré et l'indice est réinitialisé.
Compteur = 0

Tableau 4

| Indice | Fréquentation Mesurée | Durée de l'intervalle restant |
|---|---|---|
| 1 (0:00 à 3:59) | 5 | 0 minutes |
| 2 (4:00 à 7:59) | 7 | 0 minutes |
| 3 (8:00 à 11:59) | 25 | 0 minutes |
| 4 (12:00 à 15:59) | 30 | 0 minutes |
| 5 (16:00 à 19:59) | 27 | 0 minutes |
| 6 (20:00 à 23:59) | 10 | 0 minutes |

Un tampon (« buffer ») circulaire peut être mis en oeuvre pour sauvegarder des données de façon cyclique comme celle de la fréquentation par tranche horaire.

Durée estimée d'utilisation des sanitaires

Le temps moyen d'utilisation des sanitaires, même approximativement, peut être estimé grâce à un algorithme.
Pour se faire il est nécessaire d'enregistrer tous les mouvements effectués dans les sanitaires et d'en connaitre l'horodatage par rapport au début du cycle de nettoyage. Les entrées/sorties et leurs horodatages par rapport au début du cycle de nettoyage sont corrélés pour avoir une valeur qui représente une durée moyenne qui sera affinée tout au long de la mise en service du système car plus le nombre d'éléments est élevé, plus la valeur exprimée sera proche du temps moyen d'utilisation.
L'algorithme se décompose donc en deux parties, la première correspondant à l'enregistrement sous forme de tableau de tous les événements d'entrées et de sorties avec leurs horodatages. Deux compteurs sont utilisés : un pour les entrées et un pour les sorties ainsi qu'un minuteur qui se lance au début du cycle de nettoyage, lorsque le capital de propreté est au plus haut. Lorsqu'une entrée ou une sortie est détectée, la valeur du minuteur au moment de l'interruption est lue et stockée dans la case du tableau ayant l'index du compteur actuel d'entrées ou de sorties. Le compteur entrée ou sortie est incrémenté et une fois que le tableau est rempli, que le cycle de nettoyage est fini ou simplement que l'on a suffisamment d'éléments pour qu'une moyenne cohérente soit calculée, la durée moyenne est calculée.
Le nombre d'éléments du tableau à prendre en compte est déterminé et un tableau temporaire comprenant la différence temporelle entre chaque entrée et chaque sortie est obtenu :

$$\Delta i = |Si - Ei| \qquad\qquad \textit{[équation 10]}$$

dans lequel Si est la sortie correspondant à un indice i, Ei est l'entrée correspondant à un indice i, et $\Delta i$ (delta i) est la différence entre les deux.

Le k-ième percentile (en principe k est compris entre 50 et 98) du tableau temporaire est calculé, ce qui permet d'éliminer les valeurs trop éloignées de la moyenne générale, et la valeur obtenue est multipliée par un coefficient calculé expérimentalement pour obtenir la valeur estimée du temps d'utilisation moyen.

$$DEU = CO_{CR} * \Delta k\text{-ième percentile} \qquad [équation\ 11]$$

dans lequel DEU est la durée estimée d'utilisation et $CO_{CR}$ correspond à un coefficient de correction.

Il sera compris par l'Homme du Métier que l'invention décrite peut être mise en oeuvre différemment, avec des différents algorithmes utilisés, des moyens de stocker et/ou de traiter les données, etc.

Dans d'autres modes de réalisation, la zone d'instructions ZI du panneau 5 peut être un écran tactile intégrant les actionneurs, des instructions écrites sur un autocollant ou directement sur le panneau, etc. En outre, le panneau 5 n'offre pas forcément un choix parmi plusieurs niveaux de satisfaction, mais peut tout simplement demander aux utilisateurs de signaler un besoin de nettoyage en appuyant sur un actionneur marqué « Oui ».

Les moyens d'indication MI de passage d'un agent de nettoyage AN peuvent être un clavier numérique pour entrer une code identifiant, un lecteur d'une carte sans contact portée par l'agent, un lecteur biométrique (empreintes...) etc.

Au lieu d'un dispositif laser comme décrit en relation avec la Fig. 2B, tout autre moyen pour compter les entrées/sorties peut être mis en place, par exemple un tapis pression, une caméra qui compte automatiquement (sans nécessiter la présence d'un opérateur), etc.

En outre, les données de satisfaction et de comptage ne sont pas nécessairement horodatées. Le système peut toute simplement prendre en considération le nombre d'entrées, le niveau de satisfaction, et le temps depuis le dernier nettoyage pour programmer le prochain nettoyage, sans avoir besoin du horodatage de chaque évènement.

En outre, il n'est pas nécessaire que les moyens de comptage comptent le nombre de sorties.

Enfin, au lieu d'un panneau 5 qui comprend lui-même une mémoire et reçoit des données du compteur, le compteur 4 peut envoyer les données de comptage à l'unité de traitement 6, soit en temps-réel, ce qui permet à l'unité de traitement d'effectuer l'horodatage et l'analyse, soit de manière différée.

## Revendications

**1.** Système de contrôle (2) de la propreté d'un lieu (1), notamment des sanitaires, comprenant :

- un moyen de comptage (4) du nombre d'entrées dans le lieu, le moyen de comptage étant apte à fournir une donnée de comptage,
- au moins un panneau (5) monté dans le lieu et comprenant :

- un moyen de signalisation (A, A1, A2, A3, A4) d'un besoin de nettoyage du lieu, le moyen de signalisation étant apte à fournir une donnée de satisfaction,
- un moyen d'indication (MI), pour un agent de nettoyage d'indiquer le nettoyage du lieu, le moyen d'indication étant apte à fournir une donnée du dernier nettoyage comprenant au moins la date et l'heure du dernier nettoyage, et
- une mémoire pour stocker les données de comptage, de besoin de nettoyage, et du dernier nettoyage et une unité de traitement desdites données pour programmer, au moyen d'un algorithme, le prochain nettoyage par un agent de nettoyage (AN).

**2.** Système selon la revendication 1, dans lequel les données de comptage et de satisfaction sont associées à des horodatages qui sont utilisés par l'algorithme.

**3.** Système selon l'une des revendications 1 et 2, dans lequel le moyen de comptage (4) compte aussi le nombre de sorties du lieu, les données d'entrée et de sortie étant horodatées et utilisées pour évaluer la durée moyenne de chaque visite.

**4.** Système selon l'une quelconque des revendications 1 à 3, dans lequel le panneau (5) comprend en outre un affichage de la donnée du dernier nettoyage qui est mis à jour automatiquement lors de l'indication de nettoyage par l'agent de nettoyage (AN) via le moyen d'indication (MI).

**5.** Système selon l'une quelconque des revendications 1 à 4, dans lequel le panneau (5) comprend en outre un affichage du prochain nettoyage calculé par l'algorithme, l'affichage du prochain nettoyage étant ajusté en temps réel en fonction des données de comptage, du besoin de nettoyage et du dernier nettoyage.

**6.** Système selon l'une quelconque des revendications 1 à 5, dans lequel le système est relié à une unité de traitement et configuré pour envoyer les données de comptage, du besoin de nettoyage et du dernier nettoyage à l'unité de traitement (6), l'unité de traitement permettant d'établir des listes d'informations concernant un ou plusieurs panneaux, leurs emplacements, les derniers nettoyages, les agents de nettoyage qui l'ont effectué, les heures et les agents de nettoyage prévus pour les prochains nettoyages, les fréquences de nettoyage dans la journée, les niveaux de satisfaction moyens, les comptages d'utilisateurs totaux par jour, les fréquentations par tranche horaire et/ou les états des panneaux.

**7.** Système selon l'une quelconque des revendications 1 à 6, comprenant en outre un affichage configuré pour indiquer aux utilisateurs des informations concernant un nettoyage en cours ou à venir et/ou un autre lieu à utiliser.

**8.** Système selon l'une quelconque des revendications 1 à 7, dans lequel le moyen de comptage (4) comprend deux lasers (L1, L2) montés dans le cadre d'une porte (3), chaque laser ayant un faisceau (F1, F2) qui traverse la longueur de la porte et un capteur (C1, C2) en face du laser et qui reçoit le faisceau, l'ordre d'interruption des faisceaux indiquant l'entrée ou la sortie d'un utilisateur.

**9.** Système selon l'une quelconque des revendications 1 à 8, dans lequel le moyen de signalisation (A, A1, A2, A3, A4) du besoin de nettoyage permet aux utilisateurs d'indiquer un niveau de satisfaction de la propreté du lieu, qui sera utilisé pour planifier le prochain nettoyage.

**10.** Système selon la revendication 9, dans lequel le panneau (5) stocke une indication d'un niveau de satisfaction par un agent de nettoyage, cette indication étant utilisée par l'algorithme pour évaluer les indications par les utilisateurs.

**11.** Procédé de détermination du prochain nettoyage d'un lieu équipé du système selon l'une quelconque des revendications 1 à 10, comprenant les étapes de :

- compter, par le moyen de comptage, le nombre de personnes qui entrent dans le lieu,
- fournir une donnée de comptage,
- détecter la signalisation, par un utilisateur, d'un besoin de nettoyage du lieu via le moyen de signalisation,
- fournir une donnée de satisfaction,
- indiquer, par un agent de nettoyage, le nettoyage du lieu,
- fournir une donnée du dernier nettoyage comprenant au moins la date et l'heure du dernier nettoyage, et
- utiliser, par un algorithme, les données de comptage, du besoin de nettoyage et du dernier nettoyage, pour programmer le prochain nettoyage par un agent de nettoyage (AN).

**12.** Procédé selon la revendication 11, dans lequel le temps restant (TR) avant le prochain nettoyage est calculé par un algorithme utilisant un coefficient de satisfaction ($CO_{PS}$) déterminé selon des niveaux de satisfaction indiqués par les utilisateurs, un coefficient de la fréquentation ($CO_{FR}$) et la fréquentation indiquée par le moyen de comptage (4).

**13.** Procédé selon l'une des revendications 11 et 12, dans lequel la durée estimée d'utilisation du lieu est calculée par un algorithme qui utilise des données d'entrée et de sortie fournies par le moyen de comptage (4).

**14.** Procédé selon l'une quelconque des revendications 11 à 13, dans lequel un capital de propreté (CP) est calculé par un algorithme pour lier l'état de propreté du lieu (1) au temps, afin de calculer dans combien de temps l'état des sanitaires nécessitera un nettoyage.

**15.** Programme d'ordinateur stocké sur un support non-transitoire, le programme comprenant un algorithme configuré pour mettre un oeuvre le procédé selon l'une quelconque des revendications 11 à 14.

**FIG.1**

**FIG.2A**

**FIG.2B**

**FIG.3**

Europäisches
Patentamt

European
Patent Office

Office européen
des brevets

## RAPPORT DE RECHERCHE EUROPEENNE

Numéro de la demande

EP 16 19 0835

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 7 439 857 B1 (BODENHAMER JR WILLIAM [US] ET AL) 21 octobre 2008 (2008-10-21) | 9-15 | INV. G06Q10/06 |
| Y | * abrégé; figures 1-6 * <br> * colonne 1, ligne 6 - colonne 5, ligne 67 * <br> * colonne 6, ligne 19 - colonne 9, ligne 40 * <br> ----- | 1-8 | |
| Y | US 6 255 946 B1 (KIM JAE HAN [KR]) 3 juillet 2001 (2001-07-03) <br> * abrégé; figures 1-11 * <br> * colonne 1, ligne 8 - colonne 2, ligne 53 * <br> * colonne 3, ligne 31 - colonne 9, ligne 8 * <br> ----- | 1-8 | |
| X | US 2009/092008 A1 (TALARICO ANTHONY M [CA]) 9 avril 2009 (2009-04-09) <br> * abrégé; figures 1-7 * <br> * alinéa [0001] - alinéa [0008] * <br> * alinéa [0017] - alinéa [0029] * <br> ----- | 1-15 | |

DOMAINES TECHNIQUES RECHERCHES (IPC)

G06Q

Le présent rapport a été établi pour toutes les revendications

| Lieu de la recherche | Date d'achèvement de la recherche | Examinateur |
|---|---|---|
| La Haye | 14 décembre 2016 | Fiorenzo Catalano, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 19 0835

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-12-2016

| Document brevet cité au rapport de recherche | | Date de publication | Membre(s) de la famille de brevet(s) | | Date de publication |
|---|---|---|---|---|---|
| US 7439857 | B1 | 21-10-2008 | US | 7439857 B1 | 21-10-2008 |
| | | | US | 7990267 B1 | 02-08-2011 |
| US 6255946 | B1 | 03-07-2001 | CA | 2300313 A1 | 22-09-2000 |
| | | | KR | 20000060912 A | 16-10-2000 |
| | | | US | 6255946 B1 | 03-07-2001 |
| US 2009092008 | A1 | 09-04-2009 | CA | 2429223 A1 | 21-11-2004 |
| | | | US | 2004233787 A1 | 25-11-2004 |
| | | | US | 2009092008 A1 | 09-04-2009 |

EPO FORM P0460

Pour tout renseignement concernant cette annexe : voir Journal Officiel de l'Office européen des brevets, No.12/82

**EP 3 151 177 A1**

## RÉFÉRENCES CITÉES DANS LA DESCRIPTION

**Documents brevets cités dans la description**

- US 6819238 B